(19) Europäisches Patentamt
European Patent Office
Office européen des brevets

(11) **EP 1 870 443 B1**

(12) **EUROPEAN PATENT SPECIFICATION**

(45) Date of publication and mention
of the grant of the patent:
**10.12.2014 Bulletin 2014/50**

(51) Int Cl.:
***C09J 183/04*** (2006.01)

(21) Application number: **07016770.5**

(22) Date of filing: **10.05.2001**

(54) **A method for making an article from a silicone pressure sensitive adhesive composition**

Verfahren zur Herstellung eines Gegenstandes mit einer druckempfindlichen Silikon-Klebstoffzusammensetzung

Procédé de préparation d'un article de manufacture avec une composition adhésive sensible à la pression à la silicone

(84) Designated Contracting States:
**DE FR GB**

(30) Priority: **23.06.2000 US 213700 P**
**11.08.2000 US 638409**

(43) Date of publication of application:
**26.12.2007 Bulletin 2007/52**

(62) Document number(s) of the earlier application(s) in
accordance with Art. 76 EPC:
**01933248.5 / 1 299 498**

(73) Proprietor: **Momentive Performance Materials Inc.**
**Waterford, NY 12188 (US)**

(72) Inventors:
• **Griswold, Roy, Melvin**
  **New York 12020 (US)**

• **Traver, Frank, John**
  **New York 12180-9527 (US)**
• **Wengrovius, Jeffrey, H.**
  **New York 12302 (US)**
• **Lin, Shaow, Burn**
  **Michigan 48642 (US)**

(74) Representative: **Thoma, Michael et al**
**Lorenz - Seidler - Gossel**
**Widenmayerstraße 23**
**80538 München (DE)**

(56) References cited:
**EP-A- 0 628 617      EP-A- 0 787 774**
**DE-A- 4 414 653**

**Description**

The present invention relates to a method for making an article, comprising applying a layer of a silicone pressure sensitive adhesive composition on at least a portion of at least one surface of a substrate.

Commercially available silicone pressure sensitive adhesives ("PSAs") are known for their superior stability characteristics at temperatures above 350°F (176°C), compared to organic polymer-based PSA. However, the silicone PSA's improved stability at elevated temperatures, for example, up to temperatures in the range of 500 to 550°F (260 - 288 °C), is typically achieved only at the expense of reduced tack performance, particularly under low contact pressure and at short contact times, see, for example, the silicone PSAs described in U.S. Patent Nos. 5,441,811 and 5,506,288

What is needed in the art is a PSA that exhibits high tack and high lap shear strength at high temperatures while retaining a broad range of peel adhesion strength.

SUMMARY OF THE INVENTION

Further silicone adhesive compositions comprising a hydroxyl functional resin, a hydroxy diorganosiloxane and a crosslinker are known from prior art documents DE 4414653, EP 628617 or EP 787774.

It is an objective of the present invention to provide an improved method for making an article with a layer made of a PSA composition that exhibits high tack and high lap shear strength at high temperatures while retaining a broad range of peel adhesion strength.

This objective is achieved by a method according to claim 1. Preferred embodiments of the invention are laid down in the dependent claims.

As laid down in claim 1, the present invention provides a method for making an article, comprising applying a layer of a silicone composition on at least a portion of at least one surface of a substrate, further comprising condensing, at an elevated temperature in the presence of a base catalyst, a silanol-functional silicone resin, said resin comprising M structural units according to the formula $R^1_3SiO_{1/2}$, wherein each $R^1$ is independently hydroxy or a monovalent hydrocarbon radical, and Q structural units according to the formula $SiO_{4/2}$ in a ratio of M units to Q units of less than 1.1:1, a silanol-functional polydiorganosiloxane gum and a crosslinker, said composition being obtained by a method comprising:

(a) heating a mixture of the resin, gum, crosslinker, base catalyst and an organic solvent to a first elevated temperature to begin condensation of the resin, gum and crosslinker,

(b) adding a molar excess, based on moles of alkoxy groups of the resin, gum and crosslinker of the mixture of step (a), of water to the mixture of step (a),

(c) heating the mixture of step (b) to allow hydrolysis of any remaining alkoxy groups, and

(d) heating the mixture of step (c) to a second elevated temperature to drive condensation of the resin, gum and crosslinker toward completion.

The method of the present invention provides an article with a layer of silicone PSA that exhibits high probe tack and high lap shear strength at high temperatures while retaining a broad range of peel adhesion strength.

DETAILED DESCRIPTION OF THE INVENTION

In a preferred embodiment, the composition comprises, based on 100 parts by weight ("pbw") of the composition, from 30 pbw to 80 pbw, more preferably from 35 pbw to 75 pbw and even more preferably from 65 pbw to 75 pbw of the silicone resin, from 20 pbw to 70 pbw, more preferably from 25 pbw to 65 pbw and even more preferably from 25 pbw to 35 pbw of the polydiorganosiloxane gum, and from 0.1 pbw to 5.0 pbw, more preferably from 0.5 pbw to 5.0 pbw and even more preferably from 0.5 pbw to 4.0 pbw of the crosslinker. In a preferred embodiment, the relative amount of resin and gum is from about 1.2 to 2.0, more preferably 1.2 to 1.8, pbw resin per pbw gum. The PSA composition may optionally comprise a volatile organic solvent in an amount of from 10 to 70 pbw, more preferably from 20 to 60 pbw of the total of the resin and gum composition.

Silicone resins suitable as the silanol-functional silicone resin of the present invention are those silicone resins containing a non-zero amount of silicon bonded hydroxy or "silanol" groups, preferably having silanol content of from 0.2% to 5 %, more preferably from 1 % to 3 %, and even more preferably from 1.5% to 2.5% by weight, based on the weight of such hydroxyl substituents and the total weight of the resin.

In a preferred embodiment, the silanol-functional silicone resin is a MQ resin. MQ resins are generically known in the art and contain M units, represented by the formula $R^1_3SiO_{1/2}$ and Q units, represented by the formula $SiO_{4/2}$. It is recognized that while the MQ resins are primarily made from M and Q units, there can be up to 5 mole percent of D units represented by the formula $R^2_2SiO_{2/2}$ and T units, represented by the formula $R^3SiO_{3/2}$, wherein each $R^1$, $R^2$ and $R^3$ is independently hydroxyl or a monovalent hydrocarbon radical. Examples of preferred monovalent hydrocarbon radical include those monovalent hydrocarbon radicals having from 1 to 6 carbon atoms, such as alkyl radicals including methyl, ethyl, and isopropyl; alkenyl radicals including ethylene, propenyl, and hexenyl; cycloaliphatic radicals such as cyclopentyl cyclohexenyl; olefinic-containing radicals such as vinyl and allyl; and olefinic-containing radicals. Preferably, the monovalent hydrocarbon radical is methyl.

The silanol-functional silicone resin has a ratio of M units to Q units (an "M/Q ratio") of less than 1.1:1, more preferably from 0.8:1 to less than 1.1:1, still more preferably from about 0.8:1 to about 1.0:1. Silanol-functional silicone resin bends having an M:Q ratio within a preferred range may be prepared by blending silicone MQ resins, one or more of which may individually have an M/Q ratio outside the preferred range.

In a preferred embodiment, the silanol-functional silicone resin comprises one or more compounds of the structural formula (I):

$$(M_wD_xT_yQ_z)_{z'} \qquad \text{(I)}$$

wherein:

M is $R^1_3SiO_{1/2}$;

D is $R^2_2SiO_{2/2}$;

T is $R^3SiO_{3/2}$

and Q is $SiO_{4/2}$

each $R^1$, $R^2$ and $R^3$ is independently hydroxy or a monovalent hydrocarbon radical, provided that the resin has a silanol content of 0.2% to about 5% by weight, and

w, x, y, z and z' are each numbers wherein w and z are each greater than 0 are chosen to provide an M/Q ratio from about 0.8:1.0 to less than 1.1:1.0, z' is such that a solution of about 60 percent by weight ("wt%") resin solids in toluene exhibits a viscosity of from 2 to 20 $mm^2/s$ , more preferably from 4 to 15 $\dfrac{mm^2}{s}$, even more preferably from 5 to 12 $\dfrac{mm^2}{s}$, wherein the quantity$((x + y)/ (w + x + y + z))$ is less than 0.3.

Suitable hydrocarbon groups include acyclic hydrocarbon radicals, alicyclic hydrocarbon radicals and aromatic hydrocarbon radicals. Preferred hydrocarbon radicals are alkyl radicals, aryl radicals and aralkyl radicals.

As used herein, the terminology "acyclic hydrocarbon radical" means a straight chain or branched hydrocarbon radical, preferably containing from 1 to 60 carbon atoms per radical, which may be saturated or unsaturated and which may be optionally substituted or interrupted with one or more atoms or functional groups, such as, for example, carboxyl, cyano, hydroxy, halo and oxy. Suitable monovalent acyclic hydrocarbon radicals include, for example, alkyl, alkenyl, alkynyl, hydroxyalkyl, cyanoalkyl, carboxyalkyl, alkyloxy, oxaalkyl, alkylcarbonyloxaalkylene, carboxamide and haloalkyl, such as, for example, methyl, ethyl, sec-butyl, tert-butyl, octyl, decyl, dodecyl, cetyl, stearyl, ethenyl, propenyl, butynyl, hydroxypropyl, cyanoethyl, butoxy, 2,5,8-trioxadecanyl, carboxymethyl, chloromethyl and 3,3,3-fluoropropyl.

As used herein, the term "$(C_1-C_6)$alkyl" means a linear or branched alkyl group or fluoro containing alkyl group from 1 to 6 carbons per group, such as, for example, methyl, ethyl, propyl, iso-propyl, n-butyl, iso-butyl, sec-butyl, tert-butyl, pentyl, hexyl, preferably methyl.

As used herein, the terminology "alicyclic hydrocarbon radical" means a radical containing one or more saturated hydrocarbon rings, preferably containing from 4 to 12 carbon atoms per ring, per radical which may optionally be substituted on one or more of the rings with one or more alkyl radicals, each preferably containing from 2 to 6 carbon atoms per alkyl radical, halo radicals or other functional groups and which, in the case of a monovalent alicyclic hydrocarbon radical containing two or more rings, may be fused rings. Suitable monovalent alicyclic hydrocarbon radicals include, for example, cyclohexyl and cyclooctyl.

As used herein, the terminology "aromatic hydrocarbon radical" means a hydrocarbon radical containing one or more aromatic rings per radical, which may, optionally, be substituted on the aromatic rings with one or more alkyl radicals, each preferably containing from 2 to 6 carbon atoms per alkyl radical, halo radicals or other functional groups and which, in the case of a monovalent aromatic hydrocarbon radical containing two or more rings, may be fused rings. Suitable monovalent aromatic hydrocarbon radicals include, for example, phenyl, tolyl, 2,4,6-trimethylphenyl, 1,2-isopropylmethylphenyl, 1-pentalenyl, naphthyl, anthryl. As used herein, the term "aralkyl" means an aromatic derivative of an alkyl group, preferably a $(C_2-C_6)$alkyl group, wherein the alkyl portion of the aromatic derivative may, optionally, be interrupted by an oxygen atom, such as, for example, phenylethyl, phenylpropyl, 2-(1-naphthyl)ethyl, preferably phenylpropyl, phenyoxypropyl, biphenyloxypropyl.

In a preferred embodiment, the monovalent hydrocarbon radical is a monovalent $(C_1-C_6)$alkyl radical, most preferably, methyl.

Suitable silicone resins are made by methods known in the art, such as, for example, the method disclosed in U.S. Patent number 2,676,182 to Daudt et al. discloses a method in which a silica hydrosol is reacted under acidic conditions with a source of triorganosiloxy units such as hexaorganodisiloxane, e.g., hexamethyldisiloxane, or hydrolyzable triorganosiloxane, e.g. trimethylchlorosiloxane or mixtures thereof, and recovering a benzene soluble resin copolymer having M and Q units, and are commercially available, for example, the MQ resin is commercially available in solution form in a solvent such as xylene or toluene, generally at a 40% to 60% by weight solution.

Silicone gums suitable as the silanol-functional silicone gum component are those silanol-functional polyorganosiloxanes having a viscosity from about 350 Pa·s (350,000 centiPoise (cps)) to about 200 000 Pa·s (200,000,000 centipoise) at 25°C. Gum viscosity may be characterized using, e.g., using a viscosity meter such as a Rheometrics rheometer.

In a preferred embodiment, the silanol-functional silicone gum comprises one or more silanol-terminated silicone compounds of the structural formula (II):

$$M'_a D'_b T'_c Q'_d \qquad (II)$$

wherein:

M' is $R^4_3 SiO_{1/2}$;

D' is $R^5_2 S1O_{2/2}$;

T' is $R^6 SiO_{3/2}$;

and Q' is $SiO_{4/2}$

each $R^4$, $R^5$ and $R^6$ is independently hydroxy or a monovalent hydrocarbon radical, provided that at least one $R^4$ substituent per M' unit is hydroxy, and

a, b, c and d are integers effective to provide a gum which exhibits a viscosity from about 350 to about 200 000 Pa·s (350,000 to about 200,000,000 centipoise ("cps")) at 25°C, more preferably, a viscosity from about 750 Pa·s to about 2000 Pa·s (750,000 cps to about 2,000,000 cps).

Suitable monovalent hydrocarbon groups include monovalent acyclic hydrocarbon radicals, alicyclic hydrocarbon radicals and aromatic hydrocarbon radicals. Preferred hydrocarbon radicals are alkyl radicals, monovalent aryl radicals and aralkyl radicals.

In a preferred embodiment, one $R^4$ substituent per M' group is hydroxyl and each of the remaining $R^4$ substituents and each $R^5$ and $R^6$ is independently alkyl, aryl or aralkyl. In a more highly preferred embodiment, one $R^4$ substituent per M' group is hydroxyl and each of the remaining $R^4$ substituents and each $R^5$ and $R^6$ is independently methyl, phenyl or phenylpropyl.

Suitable polydiorganosiloxane gums are known and are commercially available. For example, the polydiorganosiloxanes can be prepared according to the method disclosed in U.S. Patent No. 2,814,601, wherein an appropriate siloxane is reacted with an aqueous acid in a closed system until the viscosity of the siloxane has become essentially constant. The product is then washed free of acid.

Compounds suitable for use as the polyalkoxysilane crosslinker are those silane compounds with an alkoxy group on the silicon atom.

In a preferred embodiment, the crosslinker comprises one or more of:

silanes according to structural formula III:

$$R^7_4Si \qquad (III)$$

wherein each $R^7$ is independently hydroxy, alkoxy, preferably $(C_1-C_6)$alkoxy, or a monovalent $(C_1-C_{15})$ hydrocarbon radical, provided that at least two $R^7$ substituents per molecule of the silane compound are each hydroxy or alkoxy,

poly(siloxanes) having structural units according to formula (IV):

$$R^8_2SiO_{2/2} \qquad (IV)$$

wherein each $R^8$ is independently hydroxy, alkoxy, preferably $(C_1-C_6)$alkoxy, and

poly(alkoxysiloxane-alkoxytitanate) copolymers containing first structural units according to formula (IV) and second structural units according to formula (V):

$$R^9_eTiO_{4-e/2} \qquad (V)$$

wherein each $R^9$ is independently hydroxy or alkoxy, preferably $(C_i-C_6)$alkoxy and e is an integer from 0 to 2.

In a preferred embodiment, the crosslinker is dimethyldiethoxysilane, methyltriethoxysilane, a poly(diethoxysiloxane) or a poly(diethoxysiloxane-diethoxytitanoate) copolymer.

In a preferred embodiment, the composition used in the present invention further comprises a volatile organic solvent or a mixture of solvents. As used herein, "volatile organic solvent" means any non-aqueous solvent or carrier having a boiling point above 30°C. Examples of volatile organic solvents include volatile liquid hydrocarbon solvents such as volatile paraffinic hydrocarbons, e.g. pentane, the iso-pentanes, cyclopentane, hexane, the iso-hexanes, cyclohexane, heptane, the iso-heptanes, cycloheptane, octane, the iso-octanes, cyclo-octane and the like; volatile aromatic solvents such as benzene, toluene, the various xylenes, mesitylene and the like are examples of suitable hydrocarbon solvents that may be used. It is also possible to utilize low molecular weight oxygen containing solvents such as alcohols, ketones, aldehydes and the like. Additional non-reactive volatile solvents that may be employed may be selected from the group consisting of:

(1) cyclic diorganosiloxanes having the formula (VI):

$$(R^{10}_2SiO)_p, \qquad (VI)$$

wherein $R^{10}$ is a monovalent hydrocarbon radical having from one to ten carbon atoms, preferably one to eight, more preferably one to six, and most preferably one to four carbon atoms; and p is an integer having values ranging from three to eight and

(2) linear volatile silicones having the formula (VII):

$$(R^{11}_3SiO_{1/2})(R^{12}_2SiO_{2/2})_q(R^{13}_3SiO_{1/2}) \qquad (VII)$$

wherein each $R^{11}$, $R^{12}$ and $R^{13}$ is independently a monovalent hydrocarbon radical having from one to ten carbon atoms, preferably one to eight, more preferably one to six, and most preferably one to four carbon atoms and q is an integer of from 0 to 8.

Additional ingredients known in the art, such as, for example, antioxidants, pigments, stabilizers, fillers, may be added to the composition if desired. In one embodiment, the silicone composition further comprises one or more of other silicone polymers in addition to the above described condensation product and organic polymers, such as, for example; conventional silicone PSA polymers or organic PSA polymers.

The components of the composition can be mixed in any manner such as in bulk or in organic solvent. Since the MQ resin is a solid and is conveniently prepared and handled in an organic solvent, the preparation of the composition of this invention preferably uses a volatile organic solvent for the mixing of the MQ resin and silicone gum. The mixing of the components can be accomplished by any of the techniques known in the art, such as milling; blending, stirring, and the like, either in batch or in continuous process.

In a preferred embodiment, the silicone composition is prepared by subjecting a mixture of the silicone resin, silicone gum, crosslinker to condensation conditions in the presence of a base catalyst. Preferably, the mixture is heated to a temperature of from about 110 to 130°C, for example, by refluxing a mixture of the silicone resin, silicone gum, crosslinker, base catalyst and an organic solvent, such as, for example, toluene, for about one to three hours to condense the resin, gum and crosslinker

In an even more highly preferred embodiment, a mixture of the silicone resin, silicone gum, crosslinker, base catalyst and an organic solvent is heated to a temperature of from 60 to 80°C for 2 to 4 hours. Water is added to the mixture, in molar excess based on moles of alkoxy groups of the reactants, and the resulting mixture is heated and mixed, in a preferred example, for about 1 hour, to allow hydrolysis of any remaining alkoxy groups. The reaction mixture is then heated to a temperature of from 110 to 130°C for 1 to 3 hours to complete the condensation reaction.

The water formed during the condensation reaction is removed and the resulting condensation product is cooled, its solids content is adjusted, and the mixture is neutralized with acid.

Suitable base catalysts for silanol/alkoxysilane condensation reactions are known and include, for example, alkali metal hydroxides, e.g., sodium hydroxide, potassium hydroxide and the like; and aminofunctional silanes such as those disclosed in U.S. Patent No. 4,906,695 to Blizzard et al. Suitable aminofunctional silanes include, for example, N-gamma-aminopropyltriethoxysilane, N-beta-aminoethyl-gamma-amino-isobutyltrimethoxysilane, and N-beta-aminoethyl-gamma-aminopropyltrimethoxysilane.

In a preferred embodiment, the base catalyst is sodium hydroxide, preferably in the form of an aqueous solution. The amount of base catalyst should be in the range of 3 ppm to 30 ppm, preferably 8 ppm to 20 ppm, based on the combined weight of the resin and gum.

In a preferred embodiment, the base catalyzed condensation reaction product mixture is neutralized by addition of an acid. Suitable acids for neutralizing the condensed mixture include mineral acids, such as hydrochloric acid, phosphoric acid, and the like and organic acids such as acetic acid, acetyl chloride, and the like, preferably phosphoric acid.

In a preferred embodiment, the silicone composition further comprises a free radical curing agent. Suitable free radical curing agents are those compounds that, upon thermal or radiation exposure, generate radicals which cause cure or crosslinking reactions within the silicone composition. Suitable free radical curing agents include, for example, peroxides and azo compounds. Specific peroxides include, for example, acetyl and benzoyl peroxide, cumyl peroxide, 2,4-dichlorobenzoyl peroxide. The amount of cure catalyst is generally an amount effective to cause the cure or crosslinking of silicone adhesive and is typically 0.5 to 3.0% by weight of silicone composition solids.

The silicone composition is useful as a pressure sensitive adhesive for adhering a first substrate to a second substrate.

The silicone composition is applied to at least a portion of a surface of a first substrate in any convenient manner such as by roll coating, by knife-over-roll coating and the like, by dipping the base member in solution, or by brushing or spraying solution on the surface. In a preferred embodiment, wherein the silicone composition comprises a free radical cure agent, the layer of silicone composition is then cured, for example, by heating to stabilize the layer on the substrate and prevent movement, for example, "creep" of the layer under applied pressure.

The first substrate and second a substrate are subsequently brought together, so that the layer of silicone composition is in between the substrates and in contact with each of the substrates, to bond the substrates together.

The first and second substrates may be any known solid material such as metals, such as, for example, aluminum, silver, copper, iron and their alloys; porous materials such as, for example, paper, wood, leather, and fabrics; polymeric materials such as, for example, polyolefins, such as polyethylene and polypropylene, fluorocarbon polymers such as polytetrafluoroethylene and polyvinylfluoride, polyimide, silicone elastomers, silicone resins, polystyrene, polyamides such as nylon, polyesters and acrylic polymers; painted surfaces; siliceous material such as concrete, bricks, cinderblocks, and glass such as glass cloth. Porous materials such as glass cloth are often impregnated with a substance that will prevent the migration of the PSA from one surface to another surface of the support. It is also well known to chemically treat the surface of fluorocarbon polymer support to enhance the adhesion of a PSA to said surface.

In a preferred embodiment, the first substrate comprises a flat substrate such as, for example, a sheet of paper, a woven or non-woven textile, a polymer film or a metal foil.

Examples of articles made with the present invention include pressure-sensitive adhesive tapes, labels, emblems and other decorative materials. The composition used in the present invention is particularly useful as the adhesive layer of tapes for high temperature, high stress applications, such as for example, slicing tapes for use in splicing rolls of paper in continuous printing processes.

In addition, the present invention is directed to making articles of manufacture containing a solid support having deposited on at least one surface thereof the pressure sensitive adhesive. The preferred article of manufacture made by a method within the scope of this invention is a pressure sensitive tape containing a flexible material having deposited on at least one surface thereof the pressure sensitive adhesive of this invention.

The following examples are to illustrate the invention and are not to be construed as limiting the claims.

EXAMPLES

Components used in Example 1

| F | Polydimethylsiloxane gum blend (blend of a first gum having a viscosity in the range of from 150 to 350 Pa·s (150 000 to 350 000 cps), and a second gum having a viscosity in the range of from 65 to 175 Pa·s (65 000 to 75 000 cps) |
|---|---|
| G | Polydiethoxysiloxane crosslinker, 40-42% $SiO_2$ content (Ethylsilicate 40). |
| I | Toluene. |
| J | 10% NaOH solution. |
| Q | MQ resin solution (60% resin solids in toluene) having a viscosity of 9.6 $mm^2$/s (cSt) and an M/Q ratio of 0.8:1. |

Example 1

This example illustrates that an adhesive prepared according to the invention can be blended with a commercial adhesive to impart improved lap shear properties.

A PSA composition was made as follows. To a 1 liter reactor, the following ingredients were charged: 212.4 grams of resin solution P; 70.8 grams of resin Q; 126,8 grams of gum F; 6.9 grams of crosslinker G; 93.9 grams of solvent I; and 0.08 grams of catalyst J. The components were mixed and the mixture was heated to approximately 70°C for four hours, 3.0 g water were then added, mixing was continued for 1 hr and the mixture was then refluxed at about 110°C for 2 hours. The mixture was then cooled and 0.1 g of a 10% solution of phosphoric acid was added, yielding an adhesive with a viscosity of 24,8 Pa·s (24,800 centipoise) at 59.8 wt% solids.

A commercially available PSA (56.0 wt% solids) was blended in varying amounts with the above adhesive and tested Results are shown in Table 1.

Performance Testing: To test the adhesion properties (Probe Tack, Peel Adhesion and Lap Shear Strength), the coating formulations were catalyzed with 2% of benzyl peroxide per solids (of total resin and gum) and diluted with toluene to a percent solids of 45%. The catalyzed mixture was coated onto 1 mil polyimide film in an amount equal to approximately 1.5 mil 3.82 x $10^{-3}$ cm dry adhesive thickness. The probe tack adhesion was measured on a Polyken® Probe Tack instrument at 1.0 cm/s pull speed with a 1.0 second dwell time. Two different contact pressures were applied - F weight (1000 g/$cm^2$) and A weight (100 g/$cm^2$). The high temperature lap shear strength was tested by preparing a 2.54 cm x 2.54 cm (1 inch x 1 inch) area of adhesive tape using 2.54·$10^{-3}$ cm (1 mil) Kapton® polyimide e, 1.4-1.7 mils) dry adhesive build to steel to form a laminate, applying a 500 gram weight to the adhesive strip, then placing the laminate into a forced air oven (at 260°C or 288°C (500°F or 550°F) as required) until the either the adhesive slipped off of the steel plate, or 24 hours, whichever occurred first. The time in the oven before the adhesive slipped off, or 24 hours, is the lap shear strength. The peel adhesion was measured by performing a 180° peel test of the adhesive against a clean steel plate at a rate of 30,5 cm (12 inches) per minute.

Table 1 - Performance Properties of PSA Blend

|  | 1A | 1B | 1C | 1D | Comparative Example |
|---|---|---|---|---|---|
| PSA of Example 1 | 50.0 grams | 37.5 grams | 25.0 grams | 12.5 grams | -- |
| Commercial PSA | -- | 13.6 grams | 27.3 grams | 40.9 grams | 50 grams |
| Probe Tack |  |  |  |  |  |
| (g/$cm^2$) | 756 | 617 | 599 | 568 | 512 |
| A weight | 848 | 925 | 805 | 745 | 658 |
| F weight |  |  |  |  |  |
| Peel Adhesion | 27 | 20 | 24 | 26 | 27 |
| (oz./in.) (N/m) Lap Shear | (75685) | (56063) | (67276) | (72882) | (75685) |
| Holding Test (1"x1", 500 gram wt) (550°F) 288 °C | > 24 hours | > 24 hours > | 24 hours | 6 hours | 1.5 hours |

**Claims**

1. A method for making an article, comprising applying a layer of a silicone composition on at least a portion of at least one surface of a substrate, said silicone composition comprising the condensation reaction product of a silanol-functional silicone resin, said resin comprising M structural units according to the formula $R^1_3SiO_{1/2}$, wherein each $R^1$ is independently hydroxy or a monovalent hydrocarbon radical, and Q structural units according to the formula $SiO_{4/2}$ in a ratio of M units to Q units of less than 1.1:1, a silanol-functional polydiorganosiloxane gum and a crosslinker, said silicone composition being obtained by a method comprising:

   condensing, at an elevated temperature in the presence of a base catalyst, said silanol-functional silicone resin, and

   (a) heating a mixture of the resin, gum, crosslinker, base catalyst and an organic solvent to a first elevated temperature to begin condensation of the resin, gum and crosslinker,
   (b) adding a molar excess, based on moles of alkoxy groups of the resin, gum and crosslinker of the mixture of step (a), of water to the mixture of step (a),
   (c) heating the mixture of step (b) to allow hydrolysis of any remaining alkoxy groups, and
   (d) heating the mixture of step (c) to a second elevated temperature to drive condensation of the resin, gum and crosslinker toward completion.

2. The method of claim 1, wherein the mixture of step (a) is heated to a first elevated temperature of from 60 to 80°C, for a time period of from 2 to 4 hours prior to step (b).

3. The method of claim 1, wherein the mixture of step (d) is heated to a second elevated temperature of from 110 to 130°C for a time period of from 1 to 3 hours.

4. The method of claim 1, wherein the silanol-functional silicone resin comprises one or more compounds of the structural formula:

   $$(M_wD_xT_yQ_z)_{z'}$$

   wherein:

   M is $R^1_3SiO_{1/2}$;
   D is $R^2_2SiO_{2/2}$;
   T is $R^3SiO_{3/2}$;
   and Q is $SiO_{4/2}$
   each $R^1$, $R^2$ and $R^3$ is independently hydroxy or a monovalent hydrocarbon radical, provided that the resin has a silanol content of 0.2% to 5% by weight, and
   w, x, y z and z' are each numbers wherein w and z are each greater than 0 and are chosen to provide an M/Q ratio from 0.8:1.0 to less than 1.1:1.0, z' is such that a solution of about 60 percent by weight resin solids in toluene exhibits a viscosity of from 2 to 20 mm²/s (centistokes), and wherein the quantity$((x + y)/ (w + x + y + z))$ is less than 0.3.

5. The method of claim 4, wherein each $R^1$, $R^2$ and $R^3$ is independently hydroxy or a monovalent $(C_1\text{-}C_6)$alkyl radical.

6. The method of claim 1, wherein the silanol-functional polydiorganosiloxane gum comprises a silanol-functional polyorganosiloxane polymer having a viscosity from 350,000 to 200,000,000 mPa.s (centipoise) at 25°C.

7. The method of claim 1, wherein the silanol-functional silicone gum comprises one or more silanol-terminated silicone compounds of the structural formula:

   $$M'_aD'_bT'_cQ'_d$$

   wherein:

   M' is $R^4_3SiO_{1/2}$;
   D' is $R^5_2SiO_{2/2}$;

T' is $R^6SiO_{3/2}$;

and Q' is $SiO_{4/2}$

each $R^4$, $R^5$ and $R^6$ is independently hydroxy or a monovalent hydrocarbon radical, provided that at least one $R^4$ substituent per M' unit is hydroxy, and

a, b, c and d are integers effective to provide a gum which exhibits a viscosity from 350,000 to 200,000,000 mPa.s (centipoise) at 25°C.

**8.** The method of claim 7, wherein one $R^4$ substituent per M' group is hydroxyl and each of the remaining $R^4$ substituents and each $R^5$ and $R^6$ is independently methyl, phenyl or phenylpropyl.

**9.** The method of claim 1, wherein the crosslinker comprises one or more compounds selected from:

(a) silanes according to structural formula:

$$R^7_4Si$$

wherein each $R^7$ is independently hydroxy, alkoxy, preferably ($C_1$-$C_6$)alkoxy, or a monovalent ($C_1$-$C_{15}$)hydrocarbon radical, provided that at least two $R^7$ substituents per molecule of the silane compound are each hydroxy or alkoxy,

(b) poly(siloxane)s having structural units according to formula (IV):

$$R^8_2SiO_{2/2} \text{ (IV)}$$

wherein each $R^8$ is independently hydroxy, alkoxy, preferably ($C_1$-$C_6$)alkoxy, and

(c) poly(alkoxysiloxane-alkoxytitanate) copolymers containing first structural units according to formula (IV) and second structural units according to formula:

$$R^9_eTiO_{4-e/2}$$

wherein each $R^9$ is independently hydroxy or alkoxy, preferably ($C_1$-$C_6$)alkoxy and e is an integer from 0 to 2.


**Patentansprüche**

**1.** Verfahren zur Herstellung eines Gegenstands, bei dem eine Schicht einer Siliconzusammensetzung auf mindestens einen Abschnitt mindestens einer Oberfläche eines Substrats aufgebracht wird, wobei die Siliconzusammensetzung das Kondensationsreaktionsprodukt eines silanolfunktionellen Siliconharzes umfasst, wobei das Harz M-Struktureinheiten gemäß der Formel $R^1_3SiO_{1/2}$, worin jedes $R^1$ unabhängig voneinander Hydroxy oder ein einwertiges Kohlenwasserstoffradikal ist, und Q-Struktureinheiten gemäß der Formel $SiO_{4/2}$ in einem Verhältnis von M-Einheiten zu Q-Einheiten von weniger als 1,1:1, einen silanolfunktionellen Polydiorganosiloxangummi und einen Vernetzer umfasst, wobei man die Siliconzusammensetzung durch ein Verfahren erhält, das die folgenden Schritte umfasst:

Kondensieren des silanolfunktionellen Siliconharzes bei einer erhöhten Temperatur in Gegenwart eines Basenkatalysators, und

(a) Erhitzen einer Mischung aus dem Harz, Gummi, Vernetzer, Basenkatalysator und einem organischen Lösungsmittel auf eine erste erhöhte Temperatur, um die Kondensation des Harzes, Gummis und Vernetzers in Gang zu setzen,
(b) Zugabe eines molaren Überschusses von Wasser, bezogen auf die Mol von Alkoxygruppen des Harzes, Gummis und Vernetzers der Mischung von Schritt (a), zu der Mischung von Schritt (a),
(c) Erhitzen der Mischung von Schritt (b), um die Hydrolyse der verbleibenden Alkoxygruppen zu erlauben, und
(d) Erhitzen der Mischung von Schritt (c) auf eine zweite erhöhte Temperatur, um die Kondensation des Harzes, Gummis und Vernetzers zu Ende zu bringen.

**2.** Verfahren nach Anspruch 1, wobei die Mischung von Schritt (a) auf eine erste erhöhte Temperatur von 60 bis 80 °C für eine Dauer von 2 bis 4 Stunden vor Schritt (b) erhitzt wird.

3.  Verfahren nach Anspruch 1, wobei die Mischung von Schritt (d) auf eine zweite erhöhte Temperatur von 110 bis 130 °C für eine Dauer von 1 bis 3 Stunden erhitzt wird.

4.  Verfahren nach Anspruch 1, wobei das silanolfunktionelle Siliconharz eine oder mehrere Verbindungen der folgenden Strukturformel umfasst:

$$(M_w D_x T_y Q_z)_z{}'$$

worin:

M $R^1{}_3SiO_{1/2}$ ist;
D $R^2{}_2SiO_{2/2}$ ist;
T $R^3SiO_{3/2}$ ist;
und Q $SiO_{4/2}$ ist,
wobei $R^1$, $R^2$ und $R^3$ jeweils unabhängig voneinander Hydroxy oder ein einwertiges Kohlenwasserstoffradikal sind, mit der Maßgabe, dass das Harz einen Silanolgehalt von 0,2 Gew.-% bis 5 Gew.-% hat, und
w, x, y, z und z' jeweils Zahlen sind, wobei w und z jeweils größer sind als 0 und gewählt sind, um ein M/Q-Verhältnis von 0,8:1,0 bis kleiner als 1,1:1,0 bereitzustellen, z' dergestalt ist, dass eine Lösung von etwa 60 Gew.-% Harzfeststoffen in Toluol eine Viskosität von 2 bis 20 $mm^2/s$ (Centistoke) zeigt, und wobei die Menge ((x+y)/(w+x+y+z)) kleiner ist als 0,3.

5.  Verfahren nach Anspruch 4, wobei $R^1$, $R^2$ und $R^3$ jeweils unabhängig voneinander Hydroxy oder ein einwertiges ($C_1$-$C_6$)-Alkylradikal ist.

6.  Verfahren nach Anspruch 1, wobei der silanolfunktionelle Polydiorganosiloxangummi ein silanolfunktionelles Polyorganosiloxanpolymer mit einer Viskosität von 350.000 bis 200.000.000 mPa.s (Centipoise) bei 25°C umfasst.

7.  Verfahren nach Anspruch 1, wobei der silanolfunktionelle Silicongummi eine oder mehrere silanolterminierte Siliconverbindungen der folgenden Strukturformel umfasst:

$M'_a D'_b T'_c Q'_d$
worin:

M' $R^4{}_3SiO_{1/2}$ ist;
D' $R^5{}_2SiO_{2/2}$ ist;
T' $R^6SiO_{3/2}$ ist;

und Q' $SiO_{4/2}$ ist,
wobei $R^4$, $R^5$ und $R^6$ jeweils unabhängig voneinander Hydroxy oder ein einwertiges Kohlenwasserstoffradikal ist, mit der Maßgabe, dass mindestens ein $R^4$-Substituent pro M'-Einheit Hydroxy ist; und
a, b, c und d ganze Zahlen sind, die einen Gummi bereitstellen können, der eine Viskosität von 350.000 bis 200.000.000 mPa.s (Centipoise) bei 25°C zeigt.

8.  Verfahren nach Anspruch 7, wobei ein $R^4$-Substituent pro M'-Gruppe Hydroxyl ist und jeder der verbleibenden $R^4$-Substituenten sowie jedes $R^5$ und $R^6$ unabhängig voneinander Methyl, Phenyl oder Phenylpropyl ist.

9.  Verfahren nach Anspruch 1, wobei der Vernetzer eine oder mehrere Verbindungen umfasst, die ausgewählt sind aus

    (a) Silanen gemäß der Strukturformel:

$$R^7{}_4Si$$

    worin jedes $R^7$ unabhängig voneinander Hydroxy, Alkoxy, vorzugsweise ($C_1$-$C_6$)-Alkoxy oder ein einwertiges ($C_1$-$C_{15}$)-Kohlenwasserstoffradikal ist, mit der Maßgabe, dass mindestens zwei $R^7$-Substituenten pro Molekül der Silanverbindung jeweils Hydroxy oder Alkoxy sind,
    (b) Poly(siloxan)en mit Struktureinheiten gemäß der Formel (IV):

$$R^8{}_2SiO_{2/2} \qquad (IV)$$

worin jedes $R^8$ unabhängig voneinander Hydroxy, Alkoxy, vorzugsweise $(C_1-C_6)$-Alkoxy ist, und
(c) Poly(alkoxysiloxan-Alkoxytitanat)-Copolymeren, die erste Struktureinheiten gemäß Formel (IV) und zweite Struktureinheiten gemäß der folgenden Formel enthalten:

$$R^9{}_e TiO_{4-e/2}$$

worin jedes $R^9$ unabhängig voneinander Hydroxy oder Alkoxy, vorzugsweise $(C_1-C_6)$-Alkoxy ist, und e eine ganze Zahl von 0 bis 2 ist.

**Revendications**

1. Procédé de fabrication d'un article comprenant l'application d'une couche d'une composition de silicone sur au moins une partie d'au moins une surface d'un substrat, ladite composition de silicone comprenant le produit de réaction de condensation d'une résine silicone à fonction silanol, ladite résine comprenant des motifs structuraux M selon la formule $R^1{}_3SiO_{1/2}$, dans laquelle chaque $R^1$ est indépendamment hydroxy ou un radical hydrocarboné monovalent, et des motifs structuraux Q selon la formule $SiO_{4/2}$ dans un rapport des motifs M aux motifs Q inférieur à 1,1:1, une gomme de polydiorganosiloxane à fonction silanol est un agent de réticulation, ladite composition de silicone étant obtenue par un procédé comprenant :

la condensation, à une température élevée en présence d'un catalyseur basique, de ladite résine silicone à fonction silanol, et

(a) le chauffage d'un mélange de la résine, la gomme, l'agent de réticulation, le catalyseur basique et un solvant organique à une première température élevée pour démarrer la condensation de la résine, de la gomme et de l'agent de réticulation,
(b) l'ajout d'un excès molaire, sur la base des moles de groupes alcoxy de la résine, la gomme et l'agent de réticulation du mélange de l'étape (a), d'eau au mélange de l'étape (a),
(c) le chauffage du mélange de l'étape (b) pour permettre l'hydrolyse d'éventuels groupes alcoxy résiduels, et
(d) le chauffage du mélange de l'étape (c) à une deuxième température élevée pour causer la condensation totale de la résine, la gomme et l'agent de réticulation.

2. Procédé de la revendication 1, dans lequel le mélange de l'étape (a) est chauffé à une première température élevée de 60 à 80° C pendant une durée de 2 à 4 heures avant l'étape (b).

3. Procédé de la revendication 1, dans lequel le mélange de l'étape (d) est chauffé à une deuxième température élevée de 110 à 130° C pendant une durée de 1 à 3 heures.

4. Procédé de la revendication 1, dans lequel la résine de silicone à fonction silanol comprend un ou plusieurs composés de formule structurale :

$$(M_w D_w T_y Q_z)_{z'}$$

dans laquelle :

M est $R^1{}_3SiO_{1/2}$ ;
D est $R^2{}_2SiO_{2/2}$ ;
T est $R^3SiO_{3/2}$ ;
et Q est $SiO_{4/2}$
chaque $R^1$, $R^2$ et $R^3$ est indépendamment hydroxy ou un radical hydrocarboné monovalent, à condition que la résine a une teneur en silanol de 0,2 % à 5 % en poids, et
w, x, y et z' sont chacun des nombres dans lesquels w et z sont chacun supérieurs à 0 et sont choisis de manière à produire un rapport M/Q de 0,8:1,0 à moins de 1,1:1, z' est tel qu'une solution d'environ 60 pour cent en poids de matières solides de résine dans du toluène présente une viscosité de 2 à 20 $mm^2$/s (centistokes), et où la quantité $((x + y)/(w + x + y + z))$ est inférieure à 0,3.

5. Procédé de la revendication 4, dans lequel chaque $R^1$, $R^2$ et $R^3$ est indépendamment hydroxy ou un radical alkyle

en $C_1$-$C_6$ monovalent.

6. Procédé de la revendication 1, dans lequel la gomme de polydiorganosiloxane à fonction silanol comprend un polymère de polyorganosiloxane à fonction silanol ayant une viscosité de 350 000 à 200 000 000 mPa.s (centipoise) à 25 °C.

7. Procédé de la revendication 1, dans lequel la gomme de silicone à fonction silanol comprend un ou plusieurs composés de silicone à terminaison silanol de formule structurale :

$$M'_aD'_bT'_cQ'_d$$

dans laquelle :

M' est $R^4_3SiO_{1/2}$ ;
D' est $R^5_2SiO_{2/2}$ ;
T' est $R^6SiO_{3/2}$ ;
et Q' est $SiO_{4/2}$
chaque $R^4$, $R^5$ et $R^6$ est indépendamment hydroxy ou un radical hydrocarboné monovalent, à condition qu'au moins un substituant $R^4$ par motif M' est hydroxy, et
a, b, c et d sont des entiers efficaces pour produire une gomme qui présente une viscosité de 350 000 à 200 000 000 mPa.s (centipoise) à 25 °C.

8. Procédé de la revendication 7, dans lequel un substituant $R^4$ par groupe M' est hydroxyle et chacun des substituant $R^4$ restants et chaque $R^5$ et $R^6$ est indépendamment méthyle, phényle ou phénylpropyle.

9. Procédé de la revendication 1, dans lequel l'agent de réticulation comprend un ou plusieurs composés choisis parmi :

(a) des silanes selon la formule structurale :

$$R^7_4Si$$

dans laquelle chaque $R^7$ est indépendamment hydroxy, alcoxy, de préférence alcoxy en $C_1$-$C_6$, ou un radical hydrocarboné en $C_1$-$C_{15}$ monovalent, à condition qu'au moins deux substituants $R^7$ par molécule du composé silane sont chacun hydroxy ou alcoxy,
(b) des poly(siloxane)s ayant des motifs structuraux selon la formule (IV) :

$$R^8_2SiO_{2/2} \qquad (IV)$$

dans laquelle chaque $R^8$ est indépendamment hydroxy, alcoxy, de préférence alcoxy en $C_1$-$C_6$, et
(c) des copolymères poly(alcoxysiloxane-alcoxytitanate) contenant des premiers motifs structuraux selon la formule (IV) et des deuxièmes motifs structuraux selon la formule :

$$R^9_eTiO_{4-e/2}$$

dans laquelle chaque $R^9$ est indépendamment hydroxy ou alcoxy, de préférence alcoxy en $C_1$-$C_6$ et e est un entier de 0 à 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5441811 A
- US 5506288 A
- DE 4414653
- EP 628617 A
- EP 787774 A
- US 2676182 A, Daudt
- US 2814601 A
- US 4906695 A, Blizzard